# EUROPEAN PATENT APPLICATION

(11) **EP 2 636 464 A1**
(43) Date of publication of application: **11.09.2013**
(21) Application number: 13157547.4
(22) Date of filing: 04.03.2013
(51) Int. Cl.: B21D 43/22, B21D 28/14, H02K 15/02

(54) **Blanking die assembly with anti-seizure braking device**

(30) Priority: 07.03.2012 IT MI20120356
(71) Applicant: Corrada S.p.A, 20020 Lainate (MI) (IT)
(72) Inventor: Negrello, Massimo, 20020 Lainate (Milan) (IT); Muti, Dario, 20157 Milan (IT)
(74) Representative: Zanellato, Gianluca

(57) **Abstract**

A sheet metal blanking die assembly, comprising a lower part, an upper part and guide columns. The die assembly upper part and lower part present flat parallel mutually opposing horizontal portions. The lower flat portion is arranged to receive the sheet metal, the upper flat portion presenting a plurality of punches. On the flat lower portion, blanking recesses are present to receive the respective punches and at least one detachment die, below which a brake is present, said brake presenting a through cavity positioned coaxial to that of the detachment die. The brake presents a plurality of contact zones arranged to brake the fall of the individual laminations and possibly to enable the formation of a lamination pack. Means are provided to cool and/or to lubricate just the contact zones between the laminations or the lamination pack and the brake.

## Description

The present invention relates to a blanking die assembly with an anti-seizure braking device in accordance with the introduction to the main claim.

Common blanking die assemblies are known, for example for producing magnetic laminations and/or magnetic lamination packs for electric motors and generators. These die assemblies usually present a lower part and an upper part. These two parts are mutually aligned by guide columns. The upper and lower parts of the die assembly present corresponding substantially flat portions known respectively as the flat lower portion or die plate and the flat upper portion or punch guide plate or punch stripping plate. With the die assembly open, sheet metal in the form of a strip is fed to the die assembly, to rest on the die plate. The die assembly upper part presents a plurality of punches which project from the punch guide plate during blanking, when the die assembly is closed by the action of the press. The punches then blank the laminations. For blanking purposes, recesses are provided in the die plate in positions corresponding with the punches, to receive said punches in order to implement the blanking operation.

On closing the die assembly, the punches press on the sheet metal in positions corresponding with the portion under which the relative recesses lie. Blanking is then achieved by cutting forces which the punches generate on the sheet metal at the recesses.

The die assembly presents at least one detachment die, with a relative brake, to detach the laminations from the sheet metal fed to the die assembly and to slidingly house the blanked laminations (or alternatively to brake the loose laminations by friction). This brake is in the form of a portion of the die assembly positioned below the detachment die. The brake presents a cavity coaxial with that of the detachment die. During lamination blanking, the brake enables the laminations to undergo braking (generally by interference), such that the laminations blanked in succession can be stacked together (or simply braked by friction). This stacking is implemented by suitable clips/seats present on the individual laminations, which enable the laminations to be connected together, to consequently generate a lamination pack of the required thickness.

A solution of the aforesaid type presents however various drawbacks related to possible seizure of the laminations within the accumulation brake.

To prevent the packs from undergoing seizure within the brake, emulsifiable cooling oils are normally sprayed into the sheet metal strip and/or the brakes are lubricated with suitable oils.

Because of the standard of cleaning demanded for the blanked product, this solution is not satisfactory in that such products leave oily residues/deposits on the lamination surfaces.

An object of the present invention is to provide a blanking die assembly able to overcome the aforesaid drawbacks and to solve the relative technical problems.

A particular object of the present invention is to avoid seizure of the pack or of the individual laminations within the brake, while at the same time generating a braking effect which enables the blanked laminations to be secured together (by means of said clips/seats).

A further object of the present invention is to reduce as much as possible the quantity of cooling and/or lubricant oil used to prevent seizure.

These and other objects which will be apparent to the expert of the art are attained by a blanking die assembly formed in accordance with the accompanying claims.

The present invention will be more apparent from the accompanying drawings, which are provided by way of non-limiting example and in which:
Figure 1A is a perspective view of the upper part of a blanking die assembly for laminations;
Figure 1B is a perspective view of the lower part of the same die assembly as Figure 1 A;
Figure 2 is a cut-away perspective view of the lower part of a die assembly;

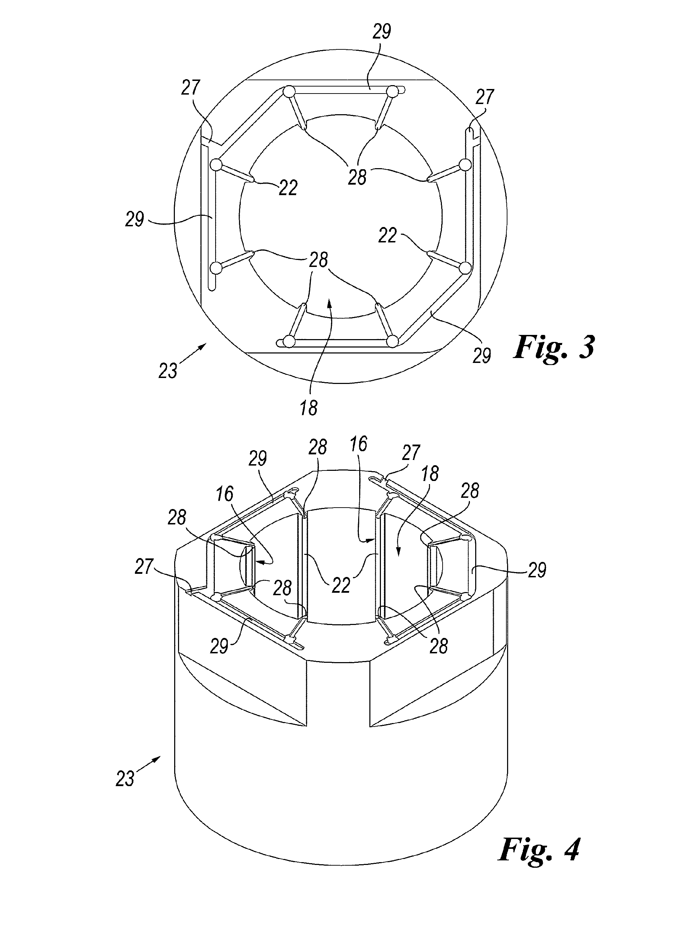

Figure 3 is a view of just the brake of the detachment die of Figure 2, seen from above;
Figure 4 s a perspective view of the brake of Figure 3.

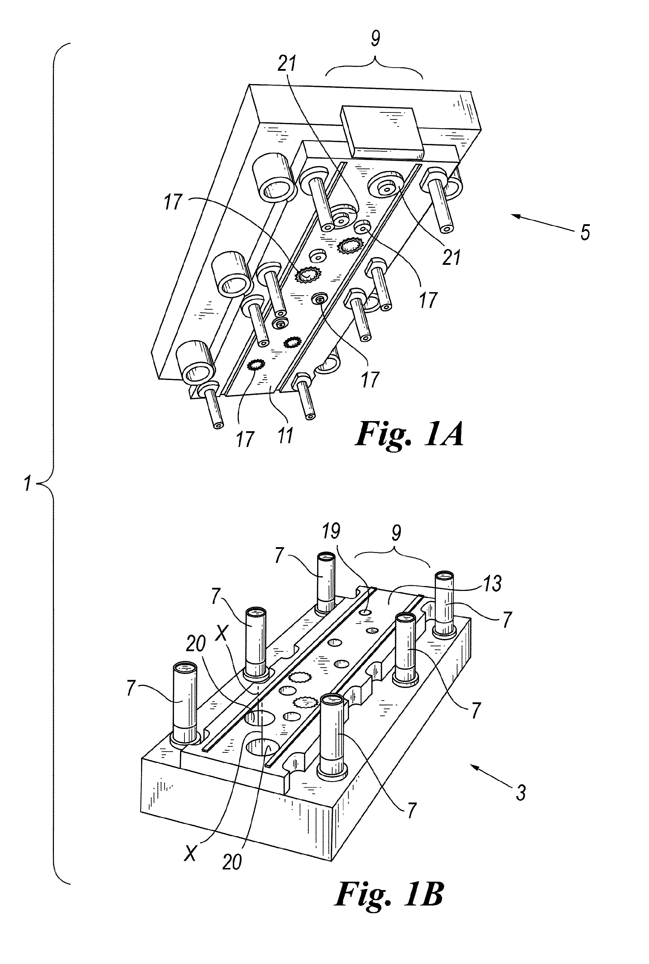

With reference to Figures 1A and 1B, a blanking die assembly is indicated overall by 1. The die assembly 1 usually presents a lower part 3 and an upper part 5. These two parts are mutually aligned by the guide columns 7 of the die assembly 1. The columns 7 enable the die upper part 5 to be maintained aligned with the lower part 3 during closure and opening operations and during blanking. In a central portion 9 of the die assembly 1 the die upper part 5 and lower part 3 present substantially flat portions known respectively as the flat upper portion 11 or punch guide plate or punch stripping plate, and the flat lower portion 13 or die plate. With the die assembly 1 open, sheet metal normally in the form of a strip (not shown in the figure) is fed into the die assembly 1 so as to rest on the die plate 13.

The upper part 5 of the die assembly 1 presents a plurality of punches 17 which at the moment of blanking project from said punch guide plate 11 to penetrate into the relative recesses 19 present in the die plate 13.

On closing the die assembly 1, the punches 17 press onto the sheet metal at that sheet metal portion below which said recesses 19 are positioned. Blanking is then achieved by cutting forces which the punch 17 generates on the sheet metal at the recesses 19.

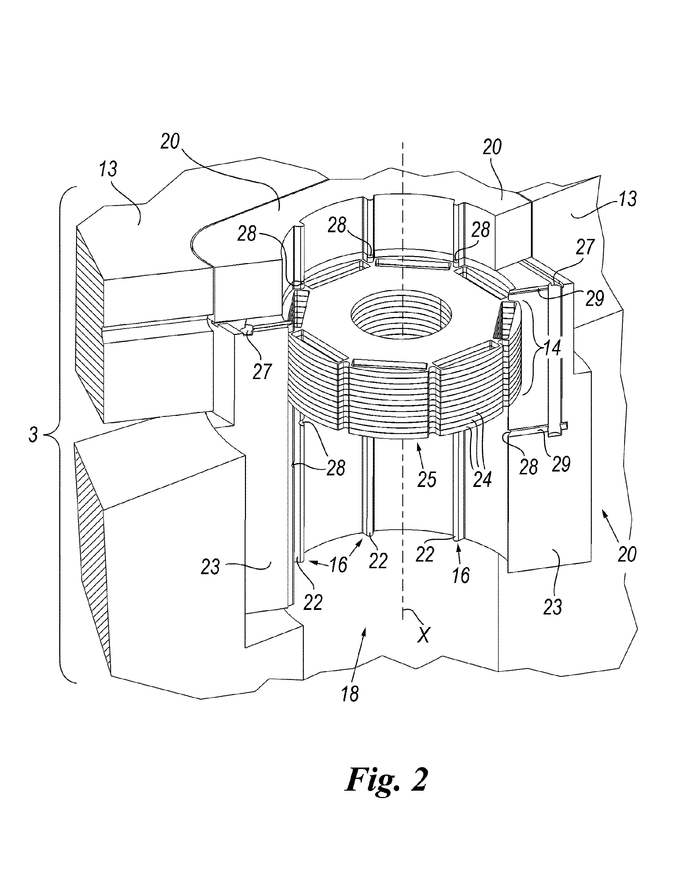

In particular, the die assembly 1 presents at least one detachment die 20 with a relative brake 23 (see Figure 2) and a respective punch 21 (see Figure 1A) which detach the laminations 24 and then stack them, to achieve in this manner the formation of a lamination pack 25.

Said brake 23 is in the form of a portion of the die assembly 1 positioned below the detachment die 20. The brake 23 presents a through cavity 18 coaxial with that of the detachment die 20.

To enable a lamination 25 to be formed (or simply to brake an individual lamination 24), the brake 23 (Figure 2) presents inside the cavity 18 a plurality of contact zones 22. The contact zones 22 extend parallel to an axis X defined by the conformation of the cavity 18 (hence in accordance with the direction of movement of the blanked laminations 42 within the die 20 and/or brake 23).

During a blanking step, the lamination 24 blanked in succession and/or the lamination pack 25 slides within the die 20 and within the brake 23. Inside this latter, the lamination movement is braked by means of the contact zones 22. Advantageously, the contact zones 22 enable the movement of the lamination 24 and/or of the lamination pack 25 to be braked by interference (more precisely by an interference fit), enabling the blanked laminations 24 to be stacked. In this manner, the brake 23 (see Figure 2) does not act on the entire lateral surface of the lamination pack 25, but only at specific points of said lateral surface, i.e. the contact zones 22. In this manner, the presence of limited contact zones 22 enables the friction surface between the brake 23 and the lateral surface of the lamination pack 25 (or of the individual lamination 24) to be reduced, so reducing the possibility of seizure phenomena and also reducing, the risk of deformation of the lamination pack 25 or of the individual laminations 24, by braking within structurally stronger zones of the lamination pack 25 or of the individual laminations 24.

To prevent seizure of the lamination pack 25 (or of the individual lamination 24) inside the cavity 18, means are present for lubricating and/or cooling just the contact zone between the laminations 24 or the lamination pack 25 and the contact zones 22. These means are suitable conduits 27 which carry cooling and/or lubricant fluids into specific zones of the contact zone 22. Lubrication is then carried out in punctual manner, exclusively at points of interference between the contact zones 22 and the lateral surface of the lamination pack 25.

Advantageously this solution enables precise dispensing of the cooling and/or lubricant fluid, such that the quantity of said cooling and/or lubricant fluid is the smallest possible to enable the lamination pack 25 to slide to the seizure limit and at the same time avoid excessive lubrication of the lamination pack 25.

In particular, the conduits 27 (Figure 2) feed a plurality of apertures 28, which open into the cavity 18 via suitable secondary conduits 29.

The conduits 27, 29 and the apertures 28 enable a cooling and/or lubricant fluid to be transferred from a position outside the brake 23 to a position inside this latter, where the lamination pack 25 is able to slide.

In a further embodiment, the contact zones 22 present in the internal cavity are located on projections or ribs present inside the internal cavity 18 of the brake 23.

## Claims

1. A sheet metal blanking die assembly (1), comprising a lower part (3), an upper part (5) and guide columns (7) for maintaining the parts (3, 5) aligned during the movement of the upper part (5) relative to the lower part (3) in order to close or open the die assembly (1) or to blank the sheet metal to obtain relative blanked laminations, the die assembly (1) upper part (5) and lower part (3) presenting flat parallel mutually opposing horizontal portions (11, 13), the lower flat portion (13) being adapted to receive the sheet metal, the upper flat portion (11) presenting a plurality of punches (17) which project downwards from it at the moment of blanking when, by the action of a press, the die assembly (1) is closed onto said flat lower portion (13), blanking recesses (19) being present to receive the respective punches (17) and at least one detachment die (20), below which a brake (23) is present, said brake presenting a through cavity positioned coaxial to that of the detachment die, said cavity enabling blanked laminations (24) to be stacked, **characterised in that** the brake (23) presents a plurality of contact zones (22) arranged to brake the fall of the individual laminations (24) and possibly to enable the formation of a lamination pack (25), means being provided to cool and/or to lubricate just the contact zones (22) between the laminations (24) or the lamination pack (25) and the brake (23).

2. A blanking die assembly (1) as claimed in claim 1, wherein said cooling and/or lubrication means comprise conduits (27, 29) enabling a cooling and/or lubricant fluid to be transferred from a position outside the brake (23) to a position inside this latter, where the lamination pack (25) or the individual lamination (24) is able to slide.

3. A blanking die assembly (1) as claimed in claim 1, wherein the contact zones (22) extend parallel to an axis X.
